# EUROPEAN PATENT APPLICATION

(11) **EP 1 465 390 A2**
(43) Date of publication of application: **06.10.2004**
(21) Application number: 04251863.9
(22) Date of filing: 29.03.2004
(51) Int. Cl.: H04L 29/12, H04L 12/28, H04L 29/08

(54) **Method of automatically determining device's nickname, and method of avoiding redundant nicknames for devices in network and network system thereof**

(30) Priority: 03.04.2003 KR 2003020985
(71) Applicant: Samsung Electronics Co., Ltd., Suwon-si, Gyeonggi-do (KR)
(72) Inventor: Kim, Sae-rin, Gangnam-gu Seoul (KR); Yook, Hyun-gyoo, Seocho-gu Seoul (KR); Lee, Jae-shin, Jongro-gu Seoul (KR)
(74) Representative: Davies, Robert Ean

(57) **Abstract**

A method of automatically determining a nickname for a device (110, 111, 120, 121, 130, 140) connected to a network (100), a method of solving the problem of nickname redundancy, and a system and device therefor. The method of automatically determining the nickname for the device includes recognizing the device connected to the network; selecting the device's nickname from a recommended nickname table; and registering the selected nickname. The method of solving the problem of nickname redundancy includes checking whether a nickname identical to the nickname of the device has already been registered; if the nickname is the same as nicknames of other devices, requesting assignment of the other nickname; if the nickname is not the same as nicknames of other devices, determining whether the nickname of the device has been registered; and if the nickname of the device has not yet been registered, registering the nickname.

## Description

The present invention relates to a method of determining a device's nickname that a user can easily recognize on a network, and more particularly, to a method of determining a device's unique nickname and a network system thereof.

In general, a home network is constructed of an Internet Protocol (IP)-based private network. Various types of devices including personal computers, personal digital assistants (PDAs), digital televisions, printers and the like, which are used in the home, are interconnected and controlled by a single home network.

One known conventional home networking method includes a common virtual computing environment, called middleware, constructed of devices present in a private network and provision of applications to the environment. The middleware enables communication between devices in the home network. As for middleware protocol, there have been proposed Home AV Interoperability (HAVI), Universal Plug and Play (UPnP), Jini, Home Wide Web (HWW) and others.

Devices that are present in such a home network, e.g., a UPnP home network, are interconnected by a network based on a peer-to-peer (P2P) scheme. Each device typically utilizes an IP address assigned thereto through a dynamic host configuration protocol (DHCP) server. If there is no DHCP server, each device uses an IP address selected according to an automatic IP assignment function. Once a device is connected to a network and is then assigned an appropriate address, a search operation is performed by a protocol such as a simple service discovery protocol (SSDP). A control point in the home network is informed of a service provided by a given device. The control point confirms the description of a device from a URL provided by the device. This description contains URLs for control, events and presentation as well as lists of embedded devices and services. After the control point secures the description of the device, it performs indispensable operations for control of the device. If the device has a URL for presentation, the control point can search for a page through this URL and load the page on a browser. Further, a user can control the device or make inquiries about the state of the device.

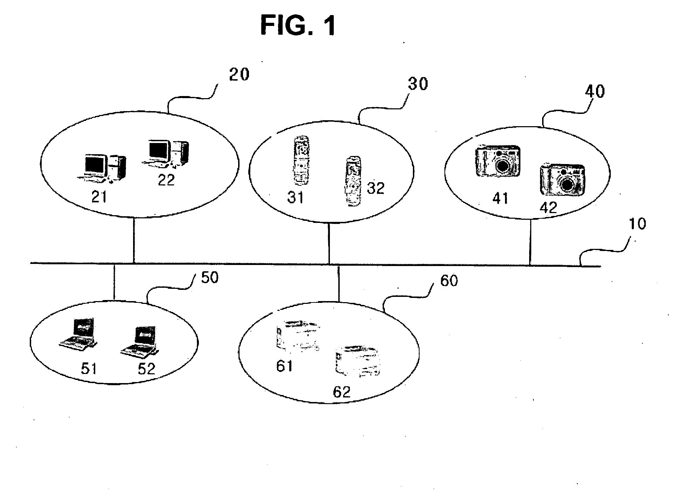

FIG. 1 is a diagram illustrating a conventional home network environment in which a unique nickname is not determined.

A network 10 may be a wired, wireless, or wired/wireless-combined network. In FIG. 1, a desktop computer group 20, a mobile phone group 30, a digital camera group 40, a notebook computer group 50 and a printer group 60 are connected to the network 10.

Two desktop computers 21 and 22 are included in the desktop computer group 20 connected to the network 10 and two mobile phones 31 and 32 are included in the mobile phone group 30 connected to the network 10. Likewise, each pair of two devices 41, 42; 51, 52 and 61, 62 is included in the digital camera group 40, the notebook computer group 50 and the printer group 60, respectively.

In FIG. 1, each device has a single IP address different from the IP addresses of the other devices, and can thus operate without any collision in the network. In a case where the devices of the home network are represented only using these IP addresses, however, users of the home network may be inconvenienced since they cannot distinguish each of the respective devices from one another. To reduce this inconvenience, manufacturers of home network devices sometimes add information on nicknames that can be easily understood by the users of the devices upon manufacture of the home network devices. Information about the nickname may be provided in various forms including text, icon shapes, sounds, moving images, or the like. Hereinafter, the term "nickname" is used as including information in the form of text, an icon, a sound, a moving image or the like which can be easily understood by a user. For example, each of the printers 61 and 62 in the printer group 60 may be represented as "printer" on a display (not shown) for displaying the state of the network 10, each of the digital cameras 41 and 42 in the digital camera group 40 may be represented as a "digital camera-shaped icon," and a sound message "This is a notebook" may be output through a sound output means (not shown) connected to the network 10 when each of the notebooks 51 and 52 in the notebook computer group 50 is selected on the display.

However, in a case where a nickname is not assigned in advance by a manufacturer of a home network device in the home network environment shown in FIG. 1, a user who does not know a method of assigning a nickname may not use the nickname of the home network device. Further, even though the manufacturer assigns the device's nickname beforehand, there may be a case where two or more devices have the same nickname. Therefore, there is a need for a method and system capable of automatically assigning a nickname to a home network device and a method and system capable of solving the problem of redundant nicknames.

Embodiments of the present invention aim to provide a method of automatically assigning nicknames to network devices and a method by which nicknames that have been assigned automatically or in advance are not redundant in a network.

Embodiments of the present invention also aim to provide a network system and device for addressing the aforementioned aim.

According to one aspect of the present invention there is provided a method of automatically determining a device's nickname, the method comprising the steps of: recognizing a first device that has been connected to a network without being assigned a nickname; selecting a nickname for the recognized first device from a recommended nickname table which is also connected to the network; and registering information regarding the selected nickname.

The step of recognizing the first device may be performed in such a manner that the first device connected to the network requests determination of its own nickname, the first device connected to the network causes a second device connected to the network to request determination of a nickname for the first device, or a second device connected to the network searches for the first device connected to the network and requests determination of a nickname for the first device.

To prevent the problem of nickname redundancy for devices, the method may further include the steps of determining whether a nickname identical with the selected nickname has already been registered; if a nickname identical with the selected nickname has already been registered, selecting a nickname different from the already registered nickname from the recommended nickname table or other recommended nickname tables; and if a nickname identical with the selected nickname has not yet been registered, registering the selected nickname. Alternatively, the method may further comprise the steps of, if it is impossible to determine whether a nickname identical with the selected nickname has already been registered, using the selected nickname; if it is possible later to determine whether the nickname identical with the selected nickname has already been registered, performing the determination at that time; if a nickname identical with the selected nickname has already been registered, selecting a nickname different from the already registered nickname from the recommended nickname table or other nickname tables; and if a nickname identical with the selected nickname has not yet been registered, registering the selected nickname.

According to another aspect of the present invention, there is provided a method of avoiding redundant nicknames for devices in a network, the method comprising the steps of: causing a first device with a nickname, and that is connected to the network, to determine whether a nickname identical to the nickname for the first device has already been registered; and if a nickname identical to the nickname for the first device has already been registered and the already registered nickname is a nickname for a second device different from the first device, requesting that a new nickname be assigned to the first device; and if a nickname identical to the nickname for the first device has not yet been registered, registering the nickname for the first device.

According to a further aspect of the present invention, there is provided a method of avoiding redundant nicknames for devices, in a network, the method comprising the steps of: recognizing a first device that has been connected to the network without being assigned a nickname; selecting a nickname for the recognized first device from a recommended nickname table or a plurality of synchronized recommended nickname tables connected to the network, and inactivating the selected nickname so that other devices cannot select the selected nickname from the recommended nickname table or the plurality of synchronized recommended nickname tables; and registering the selected nickname.

The step of recognizing the first device is performed in such a manner that the first device connected to the network requests determination of its own nickname, the first device connected to the network causes a second device connected to the network to request determination of a nickname for the first device, or a second device connected to the network searches for the first device connected to the network and requests determination of a nickname for the first device.

According to a still further aspect of the present invention, there is provided a network system, comprising: a recommended nickname table operable to store nicknames for devices connected to a network; devices connected to the network and that have their nicknames selected from the recommended nickname table; and a nickname registration-managing module for registering the selected nicknames for the devices if there are no nicknames that have already been registered and that are identical to the nicknames of the devices that have been selected from the recommended nickname table.

According to a still further aspect of the present invention, there is provided a device, operable according to: a discovery protocol by which the device, which is connected to a network, informs other devices in the network that the device itself is being connected to the network, or other devices are caused to be aware that the device itself has been connected to the network; and a nickname determination-requesting protocol operable to enable the device connected to the network to request determination of its own nickname.

For a better understanding of the invention, and to show how embodiments of the same may be carried into effect, reference will now be made, by way of example, to the accompanying diagrammatic drawings in which:
FIG. 1 is a diagram showing a conventional network environment in which a plurality of devices are interconnected;
FIG. 2 is a diagram showing a network environment for automatically determining nicknames for devices and solving the problem of nickname redundancy according to an embodiment of the present invention;
FIG. 3 is a flowchart illustrating a method of automatically determining a device's unique nickname according to a first embodiment of the present invention;
FIG. 4 is a flowchart illustrating a method of automatically determining a device's unique nickname according to a second embodiment of the present invention;
FIG. 5 is a flowchart illustrating a method of automatically determining a device's unique nickname according to a third embodiment of the present invention;
FIG. 6 is a flowchart illustrating a method of automatically determining a device's unique nickname according to a fourth embodiment of the present invention;
FIG. 7 is a flowchart illustrating a method of automatically determining a device's unique nickname according to a fifth embodiment of the present invention; and
FIG. 8 is a flowchart illustrating a method of automatically determining a device's unique nickname according to a sixth embodiment of the present invention.

Hereinafter, preferred embodiments of the present invention will be described in detail with reference to the accompanying drawings.

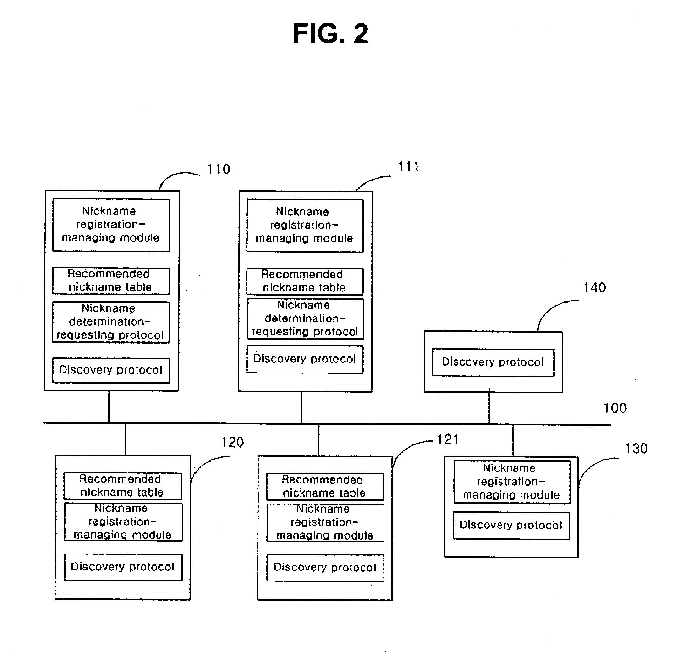

FIG. 2 is a diagram showing a network environment for automatically determining nicknames for devices and solving the problem of nickname redundancy according to an embodiment of the present invention. A network 100 may be a wired, wireless, or wired/wireless-combined network. In accordance with this embodiment, various devices 110, 111, 120, 121, 130 and 140 are connected to the network 100. Each identified device can be present inside a home or outside the home and connected via the Internet. Each device basically includes a discovery protocol for connection of the device to the network 100. The device connected to the network 100 informs a control point (not shown) of a description of the device and of services provided by the device, and may sometimes serve as a control point for other devices.

The devices connected to the network 100 are classified into devices 110, 111, 120, 121 and 130, each of which has a nickname determination-requesting protocol, and a device 140 that has no nickname determination-requesting protocol. Furthermore, among the devices 110, 111, 120, 121 and 130 with the nickname determination-requesting protocol, there are devices 110, 111, 120 and 121, each of which has a recommended nickname table. Among the devices 110, 111, 120 and 121, there are devices 110 and 111, each of which further has a nickname registration-managing module.

The nickname determination-requesting protocol allows a device connected to the network to have a nickname. The nickname determination-requesting protocol operates in three modes: a mode in which the device with the nickname determination-requesting protocol requests determination of its own nickname, a mode in which a first device with the nickname determination-requesting protocol requests a second device with the nickname determination-requesting protocol to allow the first device to have a nickname, and a mode in which the second device with the nickname determination-requesting protocol requests nickname determination so that the first device with no nickname determination-requesting protocol can have a nickname.

The recommended nickname table stores nicknames suitable for respective devices. For example, in a case where a device is a printer, a recommended nickname thereof may be the nickname "printer," a unique model number of a printer manufacturer, or a printer-shaped icon. In such a way, since the recommended nickname table includes nicknames suitable for devices, it allows devices of the same model connected to the network 100 to have different nicknames, respectively.

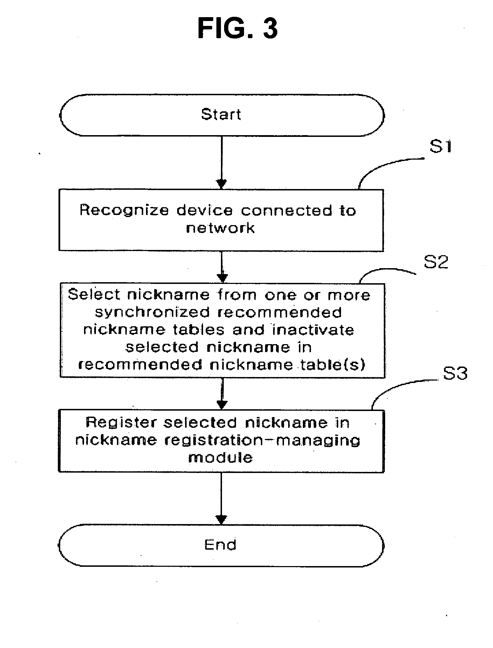

The nickname registration-managing module contained in a device serves as a kind of a distributed domain name server (DNS). The nickname registration-managing module simultaneously stores nicknames of the devices connected to the network, and information such as IP addresses or MAC addresses by which the devices can be identified (hereinafter, referred to as "device identification information"). The nicknames and device identification information stored in the nickname registration-managing module of a specific device are periodically checked so that they can be the same as the nickname registration-managing modules of other devices. Therefore, when a nickname of a given device is registered with one nickname registration-managing module, the device can have a unique nickname even in a network system with a plurality of nickname registration-managing modules. A method of determining a unique nickname for each device in the network environment shown in FIG. 2 will be described with reference to FIGS. 3 to 6.

FIG. 3 is a flowchart illustrating a method of automatically determining a device's unique nickname according to a first embodiment of the present invention.

When a device with no nickname is connected to the network, the device is then recognized (S1) The step of recognizing a device may be implemented in any of three modes: a mode in which a device connected to a network requests determination of its own nickname, a mode in which a device causes another device to request determination of its own nickname, and a mode in which one of the devices discovers the other device with no nickname and requests determination of a nickname for the other device.

When a nickname-determining request is received, a nickname is selected from a recommended nickname table connected to the network, and the selected nickname is inactivated by deleting it from the recommended nickname table and attaching a use-prohibition tag to the selected nickname, or the like (S2). At this time, to avoid the problem of nickname redundancy, the recommended nickname table may be implemented with only one recommended nickname table or a plurality of recommended nickname tables that are synchronized to have the same nicknames. The selected nickname is then registered with a nickname registration-managing module (S3). When the nickname is registered, both device identification information and the nickname are written in the nickname registration-managing module. This is equally applied to the following description wherein a nickname is "registered."

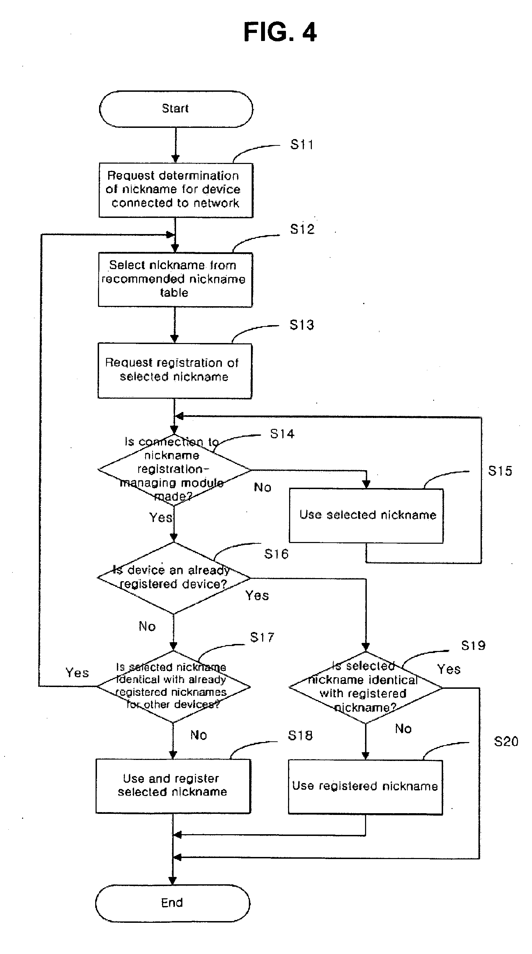

FIG. 4 is a flowchart illustrating a method of automatically determining a device's unique nickname according to a second embodiment of the present invention.

If a given device with a recommended nickname table is connected to the network, it requests determination of its own nickname (S11). One nickname is then selected from the recommended nickname table in response to the nickname-determining request (S12). After the nickname is selected, the device requests that the relevant nickname be registered with the nickname registration-managing module serving as the distributed DNS server, which is connected to the network (S13). If the nickname registration-managing module is not connected to the network (S14), the device first uses the selected nickname (S15) and attempts to connect to the nickname registration-managing module after passage of a certain period of time (S14).

If the nickname registration-managing module is connected to the network (S14), it is determined whether the device that requests determination of its own nickname is an already registered device, through device identification information written in the nickname registration-managing module (S16). If the device has not yet been registered, it is then determined whether the selected nickname is identical with nicknames of other devices that have been already registered (S17). If so, the procedure returns to step S12 to assign a new nickname to the device because the problem of redundant nickname registration may occur. If the selected nickname is not identical to other, registered, nicknames, the device continues to use the selected nickname and the nickname is registered (i.e. a device identifier and the selected nickname of the device are written) (S18). Meanwhile, if the device is an already registered device (S16), it is determined whether the selected nickname is identical with a registered nickname of the device (S19). If so, the selected nickname is continuously used. If not (S19), the selected nickname is not used but the registered nickname of the device is used (S20). It has been described in the above description that the determination is first made based on the device identifier and whether the nickname is the same is then determined. However, it should be noted that the order of determination can be reversed without departing from the spirit of the invention.

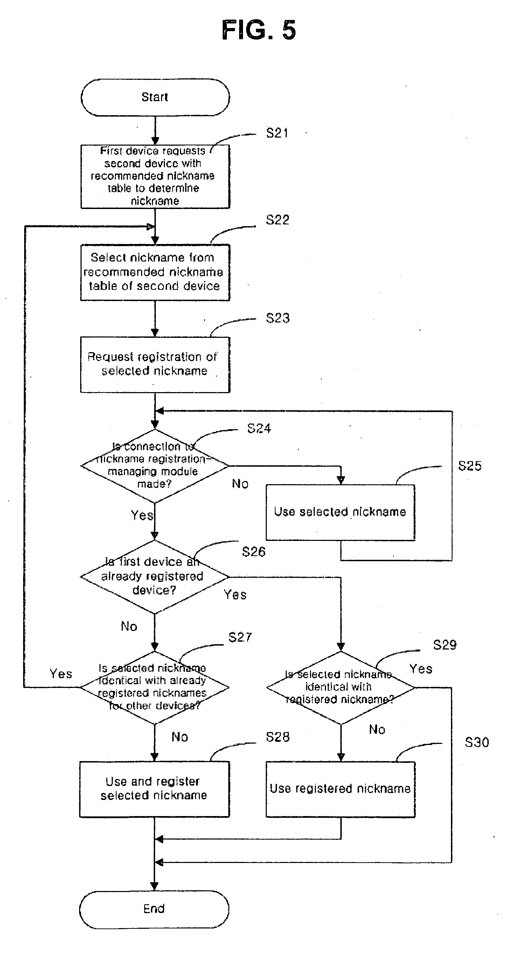

FIG. 5 is a flowchart illustrating a method of determining a nickname of a first device that does not have a recommended nickname table, according to a third embodiment of the present invention.

When the first device with no recommended nickname table is connected to the network, it requests a second device with a recommended nickname table connected to the network to determine a nickname for the first device (S21). Next, the second device with the recommended nickname table connected to the network selects a nickname for the first device (S22) and then requests registration of the selected nickname with a nickname registration-managing module (S23). If the nickname registration-managing module is not connected to the network (S24), the first device first uses the selected nickname (S25) and attempts to connect to the nickname registration-managing module after passage of a certain period of time. Meanwhile, if the nickname registration-managing module is connected to the network, it is determined whether the first device is a device that has already been registered, through device identification information written in the nickname registration-managing module (S26). If the first device has not yet been registered, it is determined whether the selected nickname is identical with nicknames of other devices that have been already registered (S27). If so, the procedure returns to step S22 to assign a new nickname to the first device because a problem of redundant nickname registration may occur. If the selected nickname is not identical to any nickname of a previously registered device, the first device continues to use the selected nickname and the nickname is registered (S28). Meanwhile, if the first device is an already registered device (S26), it is determined whether the selected nickname is identical with a registered nickname (S29). If so, the selected nickname is continuously used. If not (S29), the selected nickname is not used but the registered nickname of the device is used (S30).

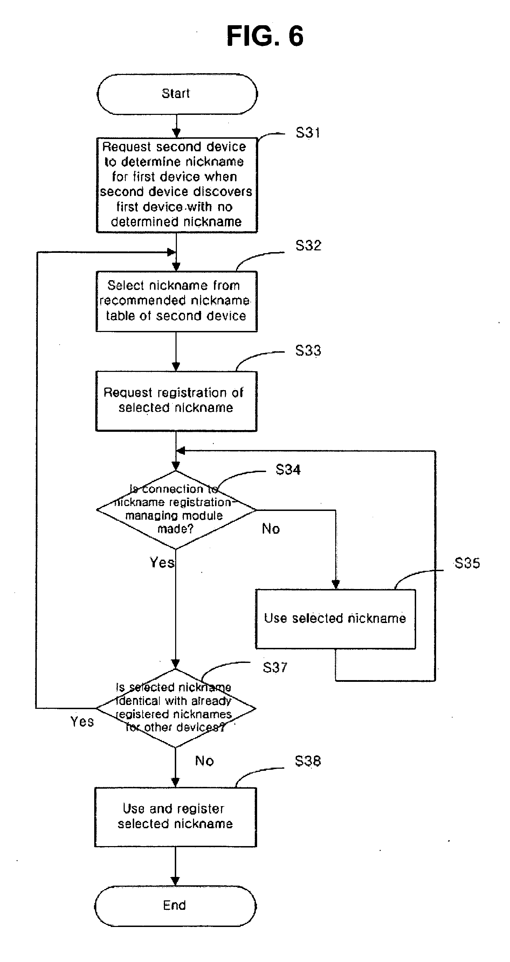

FIG. 6 is a flowchart illustrating the method for determining a nickname for a device that does not have a recommended nickname table, according to a fourth embodiment of the present invention. The first device, discussed with reference to FIG. 5, operates only when it has at least a nickname determination-requesting protocol. Such a device can be assigned a nickname in accordance with the embodiment described with reference to FIG. 6. In a case where a first device with no nickname in a network is searched for by a second device, the second device requests determination of a nickname for the first device to assign a nickname to the first device (S31). In a home network employing a UPnP protocol, a control point periodically searches devices connected to the network. In this manner, the second device can discover the first device.

The second device selects a nickname for the first device from a recommended nickname table of the second device (S32). At this time, it has been assumed that the second device has the recommended nickname table. In a case where the second device does not have a recommended nickname table, however, a nickname for the first device may be selected from another recommended nickname table in the network. Once a nickname is selected, the second device requests registration of the selected nickname of the first device (S33). If a nickname management registration module is not connected to the network, the first device uses the selected nickname (S35) and the second device periodically attempts to connect to the nickname management registration module.

If the second device is connected to the nickname management registration module (S34), it is determined whether the selected nickname is identical with nicknames of other devices that have already been registered (S37). If so, the procedure returns to step S32 to avoid the problem of nickname redundancy. If the selected nickname is different from the nicknames of other devices that have been already registered (S37), the selected nickname is registered and the first device uses the selected nickname (S38). In regard to FIG. 6, since it has been assumed that the second device discovers that the first device is not assigned a nickname, it has not been determined whether the first device has already been registered with the nickname registration-managing module as in regard to FIG. 4 or 5. However, if the second device discovers an arbitrary first device and assigns a nickname thereto in addition to a case where the second device discovers a device to which a nickname is not assigned and assigns a nickname to the discovered device, it is required to determine whether the first device has already been registered with the nickname registration-managing module.

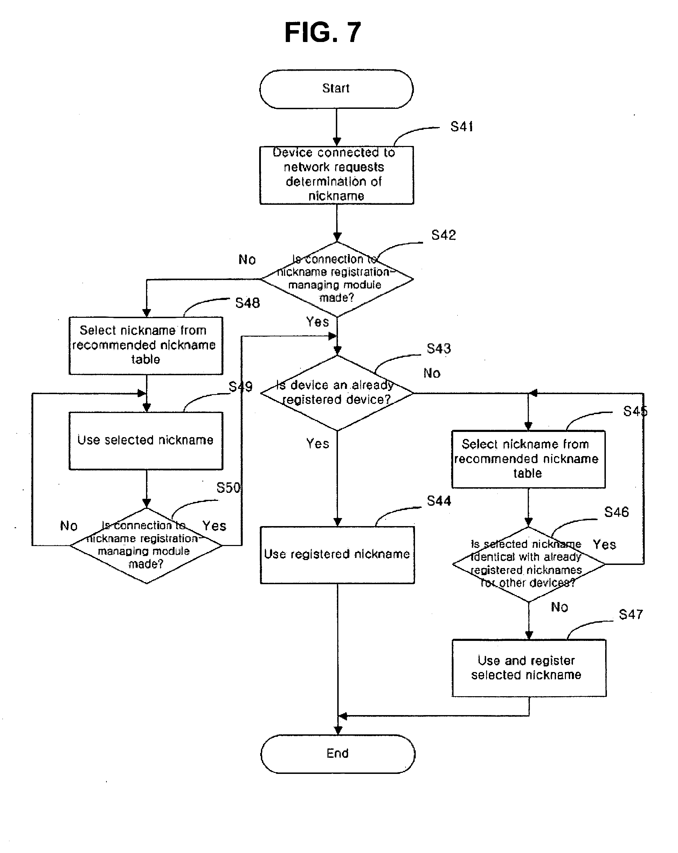

FIG. 7 is a flowchart illustrating another embodiment regarding a situation where a device that is being connected to a network requests determination of a nickname of the device in the same manner as in regard to the embodiment shown in FIG. 4. This embodiment is characterized in that connection to a nickname registration-managing module is first made and it is determined whether the device has already been registered, and a nickname is then assigned to the device if the device has not yet been registered. This will be described below in detail.

The device that has been connected to the network requests determination of a nickname (S41). If the device attempts to connect to a nickname registration-managing module and is connected thereto (S42), it is determined whether the device is an already registered device (S43). If so, the device uses a registered nickname (S44) . If it is not an already registered device (S43), the device selects a nickname from a recommended nickname table (S45). It is then determined whether the selected nickname is identical with nicknames of other devices that have already been registered (S46). If so, a new nickname is assigned to the device (S45). If not, the selected nickname is registered with the nickname registration-managing module and then used (S47). If the device is not connected to the nickname registration-managing module (S42), the device selects a nickname from the recommended nickname table (S48) and uses the selected nickname (S49). If the device periodically attempts to connect to the nickname registration-managing module and is then connected thereto (S50), the process moves to step S43. If the device is not connected to the nickname registration-managing module, the device uses the selected nickname (S49) and periodically attempts to connect to the nickname registration-managing module.

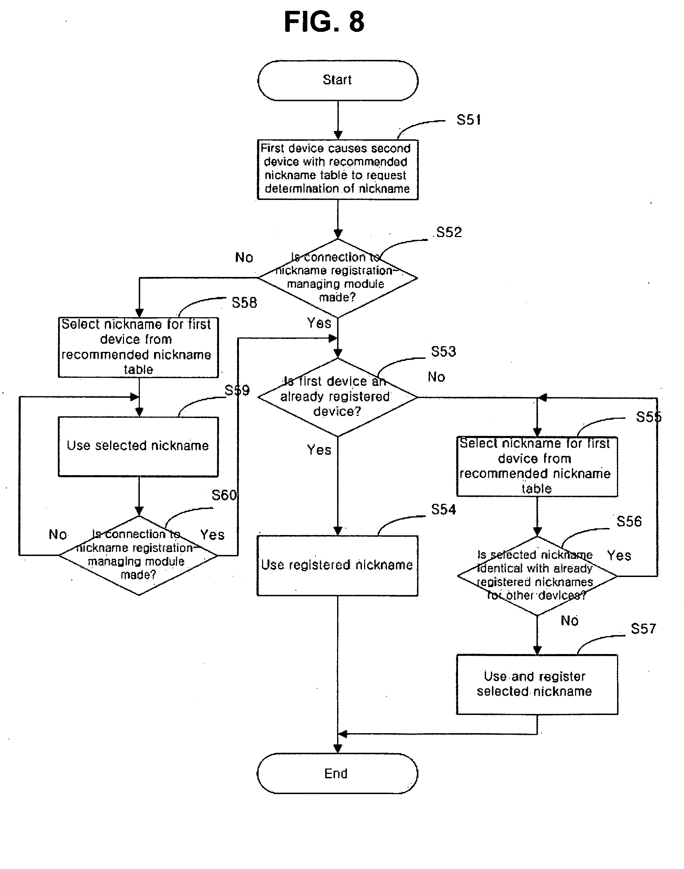

FIG. 8 is a flowchart illustrating a case where a second device requests determination of a nickname of a first device in the same manner as in regard to the embodiment shown in FIG. 5. This case is characterized in that the second device is first connected to a nickname registration-managing module and it is determined whether the first device has already been registered, and a nickname is then assigned to the first device if the first device has not yet been registered. This will be described below in detail.

The first device causes the second device with a recommended nickname table to request determination of a nickname of the first device (S51). If the second device attempts to connect to the nickname registration-managing module and is connected thereto (S52), it is determined whether the first device is an already registered device (S53). If so, a registered nickname is used (S54). If not (S53), a nickname for the first device is selected from the recommended nickname table (S55). Then, it is determined whether the selected nickname is identical with nicknames of other devices that have been already registered (S56). If so, a new nickname is assigned (S55). If not, the selected nickname is registered with the nickname registration-managing module and then used (S57). Meanwhile, if the second device is not connected to the nickname registration-managing module (S52), the second device selects a nickname from the recommended nickname table (S58) and uses the selected nickname (S59). If the second device periodically attempts to connect to the nickname registration-managing module and then is connected thereto (S60), the process moves to step S53. If the second device is not connected to the nickname registration-managing module, the second device uses the selected nickname (S59) and periodically attempts to connect to the nickname registration-managing module.

It will be understood by those skilled in the art that the present invention can be implemented in other specific forms without changing the technical spirit or features of the present invention. For example, it has been described above that a recommended nickname table is present in a device requesting a nickname or in other places except the device requesting the nickname. However, the present invention is not limited thereto and can be applied to a case where a recommended nickname table is present on the Internet or in an application program.

According to embodiments of the present invention described above, it is possible to configure a network system in which a plurality of devices connected to a network can be automatically assigned nicknames that can be easily recognized by users.

Further, according to embodiments of the present invention, it is possible to configure a network system in which a plurality of devices can be prevented from having the same nickname.

In addition, according to embodiments of the present invention, it is possible to assign a nickname to a device with no process of assigning a nickname thereto.

As a result, according to embodiments of the present invention, a user can discriminately use devices in a network due to easily understood nicknames without confusion.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of automatically determining a device's (110, 111, 120, 121, 130, 140) nickname, the method comprising the steps of:
recognizing a first device that has been connected to a network (100) without being assigned a nickname;
selecting a nickname for the recognized first device from a recommended nickname table which is also connected to the network; and
registering information regarding the selected nickname.

2. The method as claimed in claim 1, wherein the step of recognizing the first device is performed such that the first device connected to the network requests determination of its own nickname.

3. The method as claimed in claim 1, wherein the step of recognizing the first device is performed such that the first device connected to the network causes a second device connected to the network to request determination of a nickname for the first device.

4. The method as claimed in claim 1, wherein the step of recognizing the first device is performed such that a second device connected to the network searches for the first device connected to the network and requests determination of a nickname for the first device.

5. The method as claimed in any one of claims 1 to 4, further comprising:
determining whether a nickname identical to the selected nickname has already been registered;
if a nickname identical to the selected nickname has already been registered, selecting a nickname different from the already registered nickname from the recommended nickname table or other recommended nickname tables; and
if a nickname identical to the selected nickname has not yet been registered, registering the selected nickname.

6. The method as claimed in any one of claims 1 to 4, further comprising:
if it cannot be determined whether a nickname identical to the selected nickname has already been registered, using the selected nickname;
if it subsequently becomes possible to determine whether the nickname identical to the selected nickname has already been registered, performing the determination at that time;
if a nickname identical to the selected nickname has already been registered, selecting a nickname different from the already registered nickname from the recommended nickname table or other nickname tables; and
if a nickname identical to the selected nickname has not yet been registered, registering the selected nickname.

7. A method of avoiding redundant nicknames for devices (110, 111, 120, 121, 130, 140) in a network (100), the method comprising the steps of:
causing a first device with a nickname, and that is connected to the network, to determine whether a nickname identical to the nickname for the first device has already been registered; and
if a nickname identical to the nickname for the first device has already been registered and the already registered nickname is a nickname for a second device different from the first device, requesting that a new nickname be assigned to the first device; and
if a nickname identical to the nickname for the first device has not yet been registered, registering the nickname for the first device.

8. The method as claimed in claim 7, wherein if a nickname identical to the nickname for the first device has already been registered and the already registered nickname is the nickname for the first device, the nickname for the first device is used without additional registration of the nickname for the first device.

9. A method of avoiding redundant nicknames for devices (110, 111, 120, 121, 130, 140) in a network (100), the method comprising the steps of:
recognizing a first device that has been connected to the network without being assigned a nickname;
selecting a nickname for the recognized first device from a recommended nickname table or a plurality of synchronized recommended nickname tables connected to the network, and inactivating the selected nickname so that other devices cannot select the selected nickname from the recommended nickname table or the plurality of synchronized recommended nickname tables; and
registering the selected nickname.

10. The method as claimed in claim 9, wherein the step of recognizing the first device is performed such that the first device connected to the network requests determination of its own nickname.

11. The method as claimed in claim 9, wherein the step of recognizing the first device is performed such that the first device connected to the network causes a second device connected to the network to request determination of a nickname for the first device.

12. The method as claimed in claim 9, wherein the step of recognizing the first device is performed such that a second device connected to the network searches for the first device connected to the network and requests determination of a nickname for the first device.

13. A network system (100), comprising:
a recommended nickname table operable to store nicknames for devices connected to a network;
devices (110, 111, 120, 121, 130, 140) connected to the network and that have their nicknames selected from the recommended nickname table; and
a nickname registration-managing module for registering the selected nicknames for the devices if there are no nicknames that have already been registered and that are identical to the nicknames of the devices that have been selected from the recommended nickname table.

14. A device (110, 111, 120, 121, 130, 130), operable according to:
a discovery protocol by which the device, which is connected to a network (100), informs other devices in the network that the device itself is being connected to the network, or other devices are caused to be aware that the device itself has been connected to the network; and
a nickname determination-requesting protocol operable to enable the device connected to the network to request determination of its own nickname.

15. The device as claimed in claim 14, further comprising a recommended nickname table operable to store its own nickname or nicknames for other devices.

16. The device as claimed in claim 14 or 15, further comprising a nickname registration-managing module operable to store nicknames if its own nickname or nicknames for other devices are not identical with already registered nicknames.
